# FASCICULE DE BREVET EUROPEEN

(11) **EP 3 143 098 B1**
(45) Date de publication et mention de la délivrance du brevet: **10.02.2021**
(21) Numéro de dépôt: 15723013.7
(22) Date de dépôt: 13.05.2015
(51) Int. Cl.: C09K 8/584, C09K 8/588

(54) **COMPOSITIONS DE TENSIOACTIFS ET DE POLYMERES ET LEURS UTILISATIONS POUR LA RECUPERATION AMELIOREE D'HYDROCARBURES**
POLYMER- UND TENSIDZUSAMMENSETZUNGEN UND DEREN VERWENDUNGEN ZUR VERBESSERTEN RÜCKGEWINNUNG VON KOHLENWASSERSTOFFEN
POLYMER AND SURFACTANT COMPOSITIONS AND THEIR USES FOR THE IMPROVED RECOVERY OF HYDROCARBONS

(30) Priorité: 13.05.2014 FR 1454255
(43) Date de publication de la demande: 22.03.2017
(73) Titulaire: TOTAL SE, 92400 Courbevoie (FR)
(72) Inventeur: LEVITT, David, 64018 PAU Cedex 09 (FR); BOURREL, Maurice, F-64000 Pau (FR); KLIMENKO, Alexandra, F-64000 Pau (FR)
(74) Mandataire: Lavoix
(86) Numéro de dépôt international: PCT/EP2015/060667
(87) Numéro de publication internationale: WO 2015/173339

(56) Documents cités:
- EP-A1- 0 075 514
- EP-A1- 1 443 089
- EP-A1- 1 693 352
- CA-A1- 2 509 815
- US-A- 4 814 096
- US-A1- 2010 210 482

## Description

La présente invention concerne l'extraction pétrolière par récupération améliorée d'hydrocarbures ou EOR (« Enhanced Oil Recovery »), et concerne plus particulièrement une composition pour utilisation dans un procédé de type EOR.

La technique EOR comprend l'injection d'un fluide dans un réservoir souterrain pour améliorer la récupération de pétrole brut. A titre de fluide, l'eau est généralement utilisée pour balayer les hydrocarbures depuis le site d'injection vers le système de production comprenant un ou plusieurs puits de production dans lesquels le pétrole est récupéré.

En raison de la porosité du réservoir et de l'immiscibilité eau/pétrole, il est nécessaire d'améliorer l'action de l'eau en diminuant la tension interfaciale eau/hydrocarbures, en augmentant la viscosité du mélange et en améliorant la stabilité du mélange obtenu. Pour cela, des compositions de tensio-actifs et de polymères à haut poids moléculaire sont généralement utilisées.

Les tensio-actifs typiquement mis en œuvre dans l'EOR sont essentiellement de type anionique (Sharma et al., Enhanced Oil Recovery, II: Processes and Operations, publié par E.C. Donaldson,G.V. Chilingarian,T.F. Yen, 1989, chapitre 10, pages 158-159). Ainsi, les sulfonates, tels que les alkylarylsulfonates sont majoritairement utilisés dans le cadre de l'EOR.

Les polymères ont typiquement pour but d'augmenter la viscosité du mélange aqueux et d'abaisser le rapport de mobilité pour améliorer le balayage de l'huile par l'eau visqueuse. Ils sont généralement solubles ou à tout le moins dispersables dans l'eau, non-toxiques et peuvent présenter des poids moléculaires pouvant atteindre plusieurs millions de daltons. Les polymères convenant à l'EOR doivent donc augmenter la viscosité à très faible concentration, être stables dans les conditions de salinité, de pH et de température d'extraction.

Chilingarian et al. rapportent dans Enhanced Oil Recovery, II: Processes and Operations, 1989, publié par E.C. Donaldson,G.V. Chilingarian,T.F. Yen, chapitre 7, pages 158-159 que, malgré le large choix possible de polymères, seules quatre grandes familles de polymères paraissent convenir à l'EOR, à savoir :
- les polyacrylamides, de type anionique ;
- les gommes xanthane, de type anionique ;
- les celluloses, de type anionique ou non-ionique ; et
- les copolymères de polyacrylate, de type anionique ;
étant entendu que seuls les polyacrylamides et les gommes xanthane sont utilisés dans le domaine de la récupération améliorée d'hydrocarbures.

Les polymères développés depuis 50 ans et utilisés actuellement dans le cadre de l'EOR sont donc essentiellement de type anionique.

La constitution optimale des compositions à utiliser dans le cadre de l'EOR dépend de nombreux paramètres tels que notamment la nature des hydrocarbures présents à récupérer et celle des roches constituant le réservoir.

Ainsi, l'utilisation de l'EOR peut être limitée en raison de l'adsorption potentielle des agents chimiques employés, notamment des tensio-actifs sur les parois du réservoir, et du surcoût entraîné par cette consommation.

EP 1 443 089 décrit des compositions utilisées dans un procédé de production améliorée de pétrole comprenant à titre de polymères, des dérivés cellulosiques.

Il est donc désirable de mettre à disposition des compositions pour l'EOR qui améliorent la récupération des hydrocarbures, sont compatibles avec les roches rencontrées sur le terrain, et présentent une capacité d'adsorption limitée des tensio-actifs sur les réservoirs.

Il a maintenant été découvert que des compositions comprenant, à titre de polymères, un ou plusieurs polymères cationiques et/ou non-ioniques, et, à titre de tensio-actifs, un ou plusieurs tensio-actifs cationiques et/ou non-ioniques permettaient de répondre à ces objectifs.

Plus précisément, ces compositions conviennent particulièrement aux réservoirs comprenant des roches carbonatées, riches en calcite.

Selon un premier objet, la présente invention concerne un procédé d'extraction d'hydrocarbures par voie EOR dans une formation souterraine, ledit procédé comprenant :
i. l'injection d'une composition comprenant :
   a. un ou plusieurs tensio-actif(s) choisi(s) parmi les tensio-actifs cationiques et/ou les tensio-actifs non-ioniques ; et
   b. un ou plusieurs polymère(s) choisi(s) parmi les polymères cationique(s) et/ou les polymères non-ionique(s); et
ii. le déplacement des hydrocarbures par la composition injectée ; et
iii. la production d'hydrocarbures.

Il est décrit une composition aqueuse pour la récupération améliorée d'hydrocarbures (EOR) dans une formation souterraine comprenant un minéral de type carbonate comprenant :
a. un ou plusieurs tensio-actif(s) choisi(s) parmi les tensio-actifs cationiques et/ou les tensio-actifs non-ioniques ; et
b. un ou plusieurs polymère(s) choisi(s) parmi les polymères cationique(s) et/ou les polymères non-ionique(s).

Selon un mode de réalisation, ladite composition convient à la récupération améliorée d'hydrocarbures (EOR), notamment dans une formation souterraine comprenant un minéral de type carbonate.

Selon un mode de réalisation, la composition comprend un ou plusieurs tensio-actif(s) choisi(s) parmi les tensio-actifs cationiques et un ou plusieurs polymère(s) choisi(s) parmi les polymères les polymères non-ionique(s).

Selon un autre mode de réalisation, la composition comprend un ou plusieurs tensio-actif(s) choisi(s) parmi les tensio-actifs non-ioniques et un ou plusieurs polymère(s) choisi(s) parmi les polymères les polymères non-ionique(s).

Selon un autre mode de réalisation, la composition comprend un ou plusieurs tensio-actif(s) choisi(s) parmi les tensio-actifs cationiques et un ou plusieurs polymère(s) choisi(s) parmi les polymères les polymères cationiques(s).

Selon un autre mode de réalisation, la composition comprend un ou plusieurs tensio-actif(s) choisi(s) parmi les tensio-actifs non-ioniques et un ou plusieurs polymère(s) choisi(s) parmi les polymères les polymères cationique(s).

On entend ici par « polymère » toute molécule issue de la répétition d'enchaînements covalents de motifs monomériques identiques (homopolymères) ou différents (copolymères).

Selon un mode de réalisation, lesdits polymères cationiques et/ou non-ioniques sont choisis parmi les polyquaterniums, les polyoxyéthylènes (PEO), les polymères de dialkylaminoéthylacrylate (ADAME), de diméthylaminoéthylméthacrylate (MADAME), ainsi que leurs copolymères, tels que définis ci-avant.

Selon un mode de réalisation, lesdits polymères cationiques et/ou non-ioniques sont choisis parmi les polyoxyéthylènes (PEO), les polymères de dialkylaminoéthylacrylate (ADAME), de diméthylaminoéthylméthacrylate (MADAME), ainsi que leurs copolymères.

A titre de copolymère, on peut particulièrement mentionner les copolymères de la N-vinylpyrrolidone (NVP), et l'oxyéthylène (EO).

On entend ici par polyquaterniums les polymères ou copolymères dont un motif constitutif contient une ou plusieurs fonctions ammonium quaternaire.

A titre de polyquaterniums, on peut notamment citer :
- le polyquaternium-1 (éthanol, 2,2',2" -nitrilotris-, polymère avec 1,4-dichloro-2-butène et N,N,N',N'-tétraméthyl-2-butène-1,4-diamine) ;
- le polyquaternium-2 (poly[bis(2-chloroéthyl) éther-alt-1,3-bis[3-(diméthylamino)propyl]urée]) ;
- le polyquaternium-4 (copolymère de chlorure de hydroxyéthyl cellulose diméthyl diallylammonium, diallyldiméthylammonium -hydroxyéthyle cellulose);
- le polyquaternium-5 (AM-DMAEMA) (copolymère d'acrylamide et diméthylammoniuméthyl méthacrylate quaternaire) ;
- le polyquaternium-6 (DADMAC) (chlorure de poly(diallyldiméthylammonium)) ;
- le polyquaternium-7 (AM-DADMAC) (copolymère d'acrylamide et chlorure de diallyldiméthylammonium) ;
- le polyquaternium-10 (hydroxyéthyl cellulose quaternaire) ;
- le polyquaternium-11 (NVP-DMAEMA) (copolymère de N-vinylpyrrolidone et de chlorure de diméthylammonium quaternaire) ;
- le polyquaternium-15 (AM-DMAEMAMC) (copolymère d'acrylamide et chlorure de diméthylaminoéthyl méthacrylate de méthyle) ;
- le polyquaternium-16 (copolymère de N-vinylpyrrolidone et de vinylimidazole quaternaire) ;
- le polyquaternium-28 (copolymère de N-vinylpyrrolidone et de méthacrylamidopropyl triméthylammonium) ;
- le polyquaternium-32 (poly(chlorure d'acrylamide 2-méthacryloxyéthyltriméthyl ammonium)) ;
- le polyquaternium-37 (poly(chlorure de 2-méthacryloxyéthyltriméthylammonium)) ;
- le polyquaternium-42 (poly[dichlorure de oxyéthylène(diméthylimino)éthylène (diméthylimino)éthylène]) ;
- le polyquaternium-46 (terpolymère de vinylcaprolactame, N-vinylpyrrolidone, et vinylimidazole quaternaire) ;
- le chlorure de guar hydroxypropyltrimonium (GHPTC) ;
- APTAC issu du monomère (chlorure d'acrylamidopropyltriméthylammonium) de formule : 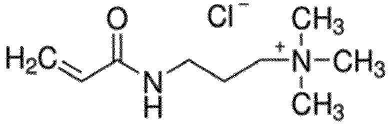
- les polymères de méthacryloyle tels que les polymères de MAPBAC (Méthacryloyl Aminopropyl diméthyl benzyl ammonium chloride, 122988-32-3), MAPDES (Méthacryloyl aminopropyl diméthyl éthyl ammonium éthylsulfate, 70942-19-7), MAPTAC (Méthacryloyl aminopropyl triméthyl ammonium chloride, 51410-72-1), MAPTAP (Méthacryloyl aminopropyl triméthyl ammonium p-toluènesulfonate, 98060-29-8), MAPTAS (Méthacryloyl aminopropyl triméthyl ammonium méthylsulfate, 51441-65-7), MOEBAC (Méthacryloyl oxyéthyl diméthyl benzyl ammonium chloride, 46917-07-1), MOEDES (Méthacryloyl oxyéthyl diméthyl éthyl ammonium éthylsulfate, 13223-03-5), MOETAP (Méthacryloyl oxyéthyl triméthyl-ammonium p-toluènesulfonate, 40820-77-7), MOETAS (Méthacryloyl oxyéthyl triméthyl ammonium méthylsulfate, 6891-44-7), QDM (Méthacryloyl oxyéthyl triméthyl ammonium chloride, 5039-78-1).

On peut plus particulièrement citer :
- le Polyquaternium-6 (DADMAC) 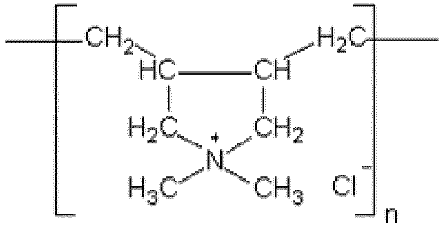 et ses copolymères, tels que le copolymère de NVP ou d'acrylamide (AM). Les copolymères AM-DADMAC sont notamment commercialisés sous les noms Flocare C107 (liquid), C7000 (dry) (SNF),
- le Polyquaternium-11 (NVP-DMAEMA) répondant à la formule : 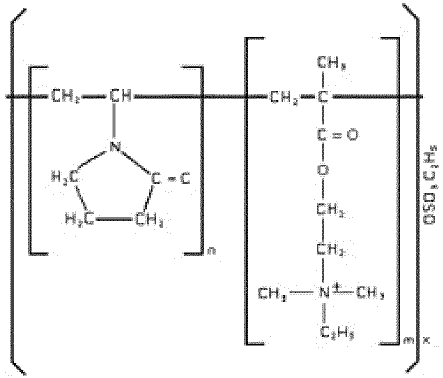 Notamment commercialisé sous les noms Flocare C111 (SNF), Gafquat 440, 734, 755, 755N (Ashland), Jarpol PQ11 (Jarchem), Luviquat PQ11 (BASF), Mirapol PQ-11 (Rhodia), Polyquaternium-11 (Chemerisia), Trichogen VEG LS 8960 (Laboratoires Serobiologiques).
- le Guar Hydroxypropyltrimonium Chloride (GHPTC) de formule :

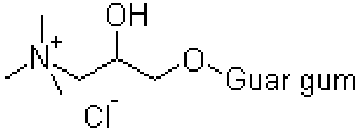

Selon un mode de réalisation, les polymères cationiques et/ou non-ioniques convenant à l'invention sont des copolymères des polymères ci-dessus, et plus particulièrement des copolymères avec la NVP ou l'oxyéthylène (EO), plus particulièrement avec la NVP ; tels que notamment NVP-DADMAC, NVP-DMAEMA, NVP-APTAC, NVP-ADAME, NVP-MADAME, EO-DADMAC, EO-DMAEMA, EO-APTAC, EO-ADAME, EO-MADAME.
La NVP présente notamment l'avantage d'améliorer la stabilité des polymères à la température.

Selon un mode de réalisation, lesdits polymères peuvent être tout particulièrement choisis parmi NVP-DADMAC, NVP-DMAEMA, NVP-APTAC, NVP-ADAME, NVP-MADAME, PEO, EO-DADMAC, EO-DMAEMA, EO-APTAC, EO-ADAME, EO-MADAME.

Généralement, lesdits polymères selon l'invention ont un poids moléculaire compris entre 1 million de daltons et 30 millions de daltons, notamment entre 3 millions de daltons et 25 millions de daltons.

Le poids moléculaire moyen des polymères est généralement ajusté en fonction de la perméabilité des réservoirs. Typiquement, plus le réservoir présente une perméabilité élevée, plus le poids moléculaire de polymères peut être élevé. Ainsi, de façon illustrative, des poids moléculaires de l'ordre de 20 à 25 millions daltons peuvent être envisagés pour des réservoirs très perméables (perméabilité > 1 Darcy) ou de l'ordre de 3 à 5 millions daltons pour les réservoirs basse perméabilité (< 1 Darcy), clastiques ou carbonates.

Les poids moléculaires mentionnés s'entendent en poids moléculaire moyen en nombre, c'est-à-dire la moyenne des masses molaires pondérées par le nombre des chaînes de chaque longueur. Ils peuvent être mesurés par toute méthode connue, notamment par osmométrie, cryoscopie, ébulliométrie ou chromatographie d'exclusion stérique.
La distribution de taille moléculaire résultant de polymérisation radicalaire étant très large, la modification *a postori* de la distribution de taille moléculaire par la dégradation mécanique peut être utilisée pour enlever les plus hauts poids moléculaires, afin d'améliorer l'injectivité du polymère.

Le degré de polymération peut être notamment choisi en fonction de la température des conditions d'exploitation. Généralement, on préfère les polymères stables à des températures supérieures à 50°C, généralement supérieures à 80°C.

La concentration de polymère dans la composition peut être déterminée de façon à contrôler la mobilité et à pousser le volume d'hydrocarbures vers les puits de production. Elle dépend généralement de la nature des hydrocarbures.

Selon un mode de réalisation, ladite composition comprend de 0,001 à 1% en poids de polymère(s), cationique(s) et/ou non ionique(s), notamment de 0,01 à 0,5% en poids.

On entend ici par tensio-actif tout composé capable de diminuer la tension interfaciale entre l'eau et les hydrocarbures. Ils se présentent généralement en deux parties de polarité différente : l'une lipophile (qui retient les matières grasses) et apolaire, l'autre hydrophile (miscible dans l'eau) et polaire. Ils permettent ainsi de solubiliser, ou à tout le moins disperser, les deux phases.

On appelle tensio-actif cationique un tensio-actif dont la partie hydrophile est chargée positivement. On entend par tensio-actif non-ionique un tensio-actif ne présentant pas de charge nette (ne s'ionisant pas dans l'eau).

Selon un mode de réalisation, lesdits tensio-actifs cationiques peuvent être choisis parmi les sels d'ammonium quaternaire ; les sels de phosphonium ; les sels de sulfonium ; les sels de iodonium.

Ainsi, on peut notamment citer les tensio-actifs cationiques répondant à la formule générale (I) : 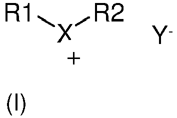 dans laquelle :
-X⁺- est choisi parmi -N⁺ (R3)(R4)-, -S⁺ (R3)-, -I⁺-,- P⁺H₄ (R3)(R4)-;
Y⁻ est choisi parmi RSO₄⁻, Hal⁻, RCOO⁻ ;
R1, R2 identiques ou différents représentent indépendamment un groupe choisi parmi les groupes (C1-C24)alkyle linéaire ou ramifié, (C2-C24)alkényle linéaire ou ramifié, (C6-C12)aryle, alkyle et alkényle étant éventuellement substitué par un groupe phényle ;
ou bien R1 et R2 forment ensemble avec l'atome auquel ils sont reliés un cycle hétéroaromatique de 5 à 7 chaînons (ledit cycle comprenant de préférence l'atome d'azote à titre de seul hétéroatome) ;
R3, R4, lorsqu'ils sont présents, sont identiques ou différents, représentent indépendamment un groupe (C1-C24)alkyle linéaire ou ramifié ou un groupe de formule - [(CH₂)ₘO]ₙ-H ;
Hal⁻ représente un halogénure tel que Cl⁻, Br⁻ ;
R représente un groupe (C1-C6)alkyle linéaire ou ramifié ;
m est égal à 2 ou 3 ;
n représente le nombre de motifs oxyde d'éthylène ou oxyde de propylène et est compris entre 1 et 5 .

Ainsi parmi les composés de formule (I), on peut notamment citer ceux répondant à la formule (II) : 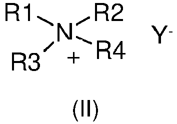 dans laquelle R1, R2, R3 et R4 sont tels que définis ci-avant, étant entendu que R1 et R2 peuvent former un noyau pyridinium avec l'atome d'azote et R3 est absent ;
et notamment les sels d'alkyltriméthylammonium de formule (III) :

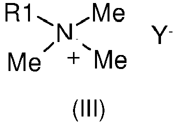

Où R1 et Y sont tels que définis ci-dessus.

A titre illustratif de tensio-actifs, on peut notamment citer les sels d'alkyldiméthylbenzylammonium (ou benzalkonium) de formule (II) où R3=R4=méthyle, R1=benzyle et R2 et Y sont tels que définis ci-dessus.

Les caractéristiques énoncées pour les formules (I), (II) et (III) peuvent correspondre à des valeurs moyennes dans le cas de mélanges.

A titre de tensio-actif non-ionique convenant à l'invention, on peut notamment citer les tensio-actifs :
- à liaison ester de type R-CO-O-R' tels que les esters de glycol, les esters de glycérol, les esters de polyoxyéthylène glycol, les esters de sorbitan, les esters de sorbitan polyoxyéthylèniques ou polysorbates tels que les tensio-actifs de type Tween ;
- à liaison éther de type R-O-R' tels que les alcools alkoxylés, les alcools éthoxylés, les éthers d'alcools gras et de polyoxyéthylène glycol ;
- à liaison de type amide de type R-CO-NH-R'

Selon un mode de réalisation particulier, les tensio-actifs convenant à l'invention peuvent être plus particulièrement choisis parmi le dichlorhydrate d'octénidine ; les sels d'alkyltriméthylammonium tels que le bromure de cétyl triméthylammonium (CTAB), le bromure de tetradécyl triméthylammonium (TTAB) ou bromure d'hexadécyl triméthylammonium, le chlorure de cétyl triméthylammonium (CTAC), le chlorure de suif triméthylammonium, le chlorure de suif dihydrogéné triméthylammonium ; le chlorure de cétylpyridinium (CPC) ; le chlorure de benzalkonium (BAC) ; le chlorure de benzéthonium (BZT) ; le 5-bromo-5-nitro-1,3-dioxane ; le chlorure de diméthyldioctadécylammonium ; le bromure de cétrimonium ; le bromure de dioctadécyldiméthylammonium (DODAB), les esters de glycol, les esters de glycérol, les esters de polyoxyéthylène glycol, les esters de sorbitan, les esters de sorbitan polyoxyéthylèniques ou polysorbates tels que les tensio-actifs de type Tween ; les alcools alkoxylés tels que les alcools éthoxylés ; les éthers d'alcools gras et de polyoxyéthylène glycol.

Selon un mode de réalisation, ladite composition comprend de 0,01 à 10% en poids de tensio-actifs(s), cationique(s) et/ou non ionique(s), notamment de 0,1 à 5% en poids, plus particulièrement de 0,1 à 2% en poids.

Selon une variante, ladite composition peut comprendre un ou plusieurs autres ingrédients habituellement utilisés dans les compositions pour EOR. Ainsi, typiquement, les compositions peuvent comprendre en outre de l'huile telle que l'huile minérale, et/ou des sels, tels que notamment le chlorure de sodium ou le sulfate de sodium.

L'usage de sels permet d'ajuster le rapport entre l'hydrophilie et la lipophilie des tensioactifs, afin d'avoir une tension minimale à la salinité ciblée.

Selon un mode de réalisation, ladite composition comprend de 1 à 20% en poids d'huile, notamment de 5 à 10% en poids.

Selon un mode de réalisation, ladite composition comprend de 10 à 500g/L de sels, notamment de 30 à 100g/L.

Généralement, les compositions utilisées pour l'EOR peuvent comprendre en outre un ou plusieurs additif(s), tels que les alcalis, tampons, stabilisateurs, solubilisants, co-surfactants, clarifiants, bactéricides, inhibiteurs de dépôts, inhibiteurs de corrosion, inhibiteurs d'hydrates.

A titre illustratif d'additifs usuels, on peut mentionner :
∘ à titre d'alcalis et/ou tampons : Na₂CO₃, NaHCO₃, NaOH, EDTA, DTPA, PIPES, NH₃, CH₃COONH₄ ;
∘ à titre de stabilisants : bisulfite de sodium ou d'ammonium, sulfite de sodium, dithionite de sodium, borohydrure de sodium, métaborate de sodium (NaBO2);
∘ à titre de solubilisants : les glycols tels que les éthylène glycols (PEG, triéthylène glycol, etc.), les propylène glycols (DPG, TPG, etc.), etc... ; les éthers de glycol tels que le diethyleneglycol monobutylether (DGBE), ethyleneglycol monobutylether (EGBE), etc... ;
∘ à titre de co-surfactants : un des tensio-actifs ci-dessus ou leurs dérivés tels que les dérivés à chaîne latérale ramifiée ou à chaînes multiples hydrophobes, afin d'augmenter le désordre à l'interface ; un tensio-actif non-ionique tel qu'un alkyl-alkoxylate (par exemple de type R-PO(y)-EO(x)) où PO désigne polyoxypropylène et EO désigne polyoxyéthylène.

On désigne ici par co-surfactants les agents généralement utilisés pour améliorer les conditions de la solution (turbidité, viscosité, temps d'équilibration). Ces agents ne permettent généralement pas, à eux seuls, de diminuer la tension interfaciale de façon satisfaisante.

Avantageusement, les tensio-actifs cationiques ou non-ioniques des compositions selon l'invention sont généralement compatibles avec les bactéricides et/ou les agents anti-hydrate utilisés pour l'extraction. Ceci permet de s'affranchir des problèmes d'incompatibilité rencontrés avec les tensio-actifs anioniques généralement utilisés pour l'EOR.

Lorsque des anions et notamment des anions divalents (tels que les sulfates et les carbonates) sont présents dans le milieu, il peut être avantageux de les enlever, par exemple par application de techniques généralement utilisées, telles que par désulfatation, notamment en prenant en compte le ratio respectif des anions mono et divalents.

Les compositions peuvent également comprendre des alcools, des glycols, des amines de formule R'NH₂, ou des polyamines de formule R"[NH(CH₂)₃]pNH2, R' et R" étant des radicaux alkyle ou aryle, ou des amines primaires éthoxylées de formule : (CH₂CH₂O)y - R"N - (CH₂CH₂O)ₓ telle que la diéthanolamine.

Les tensio-actifs et autres additifs mentionnés ici peuvent être polymériques. Ils ont alors de préférence des poids moléculaires moyens inférieurs à 1 million de daltons, notamment inférieurs à 500 Kdaltons.

Il est également décrit le procédé de préparation d'une composition selon l'invention. Généralement, ledit procédé peut être conduit par application ou adaptation de méthodes usuelles.

Selon une variante, la composition peut être préparée par mélange de ses constituants, notamment sous agitation.

Selon une autre variante, la composition peut être préparée par mélange d'un premix dans l'eau, ledit premix comprenant :
a. un ou plusieurs tensio-actif(s) choisi(s) parmi les tensio-actifs cationiques et/ou les tensio-actifs non-ioniques ; et
b. un ou plusieurs polymère(s) choisi(s) parmi les polymères cationique(s) et/ou les polymères non-ionique(s) ;
tels que définis ci-avant
à de l'eau.
tels que définis ci-avant.

Le terme « premix » désigne ici les constituants avant avant dilution dans l'eau ou en solution concentrée dans l'eau, ou dans un solvant, de type huile précitée par exemple.

Généralement, le mélange dans l'eau est réalisé sous agitation.

Le premix pour la récupération améliorée d'hydrocarbures (EOR) est également un objet de la présente invention.

Le premix se présente généralement sous forme de mélange de ses ingrédients ou de solution concentrée de ses ingrédients. La concentration des tensio-actifs dans le premix est généralement comprise entre 1 et 50% en poids. La concentration des polymères dans le premix est généralement comprise entre 0,1 et 10% en poids.

Le premix permet de former aisément la composition pour EOR sur le site d'exploitation avant l'injection.

Selon un mode de réalisation, ledit premix convient donc à la récupération améliorée d'hydrocarbures (EOR), notamment dans une formation souterraine comprenant un minéral de type carbonate.

Généralement, on dilue le premix de façon appropriée dans l'eau pour former les compositions selon l'invention ; généralement le premix est dilué de 1 à 20 fois environ, avant injection.

La composition selon l'invention est spécialement adaptée pour être mise en œuvre dans un procédé de récupération améliorée d'hydrocarbures (EOR). Elle est généralement désignée par le terme « bouchon », « slug », notamment (A)SP ((Alkaline) surfactant polymer slug).

La composition selon l'invention convient pour la récupération améliorée d'hydrocarbures (EOR).

Il est également décrit ici l'utilisation d'une composition pour la récupération améliorée d'hydrocarbures (EOR) dans une formation souterraine.

Selon un mode de réalisation, ledit procédé convient à la récupération améliorée d'hydrocarbures (EOR), dans une formation souterraine comprenant un minéral de type carbonate.

Les hydrocarbures déplacés peuvent être récupérés par un ou plusieurs puits de production par toute méthode connue de l'homme du métier.

Typiquement, l'injection est réalisée dans un ou plusieurs puits d'injection installé(s) dans une formation souterraine contenant des hydrocarbures.

La composition a pour but de balayer les hydrocarbures vers le(s) puits de production. Le déplacement des hydrocarbures est facilité par la composition selon l'invention d'une part grâce à la présence de tensio-actifs qui forment une émulsion hydrocarbures/eau et diminuent la tension interfaciale, et d'autre part par la présence de polymères qui augmentent la viscosité et améliorent la stabilité du mélange. La quantité de la composition à injecter dépend de l'estimation de la capacité d'adsorption de la formation pétrolière, ainsi que de considérations économiques.

Généralement, on injecte un volume correspondant à une dose de polymères comprise entre 100 et 10 000ppm.

L'injection d'une composition selon l'invention peut être suivie de l'injection d'une composition auxiliaire, notamment une composition auxiliaire de viscosité plus élevée que la composition selon l'invention.

Selon un mode de réalisation, ultérieurement à l'étape i et antérieurement à l'étape ii, le procédé peut comprendre l'injection de ladite composition auxiliaire comprenant un ou plusieurs polymères choisis parmi les polymères cationiques et/ou non-ioniques, et de l'eau.

Ladite composition auxiliaire comprend généralement de l'eau, des sels et un ou plusieurs polymères, notamment choisis parmi les polymères cationiques et/ou non-ioniques tels que définis précédemment.

Typiquement, la composition auxiliaire est dénuée de tensio-actif(s).

Généralement, la concentration du polymère dans la seconde composition est supérieure à la concentration du polymère dans la première composition.

La composition auxiliaire est donc moins mobile que la composition selon l'invention qui est elle-même généralement plus visqueuse que le volume d'hydrocarbures, ce qui évite les phénomènes d'instabilité et de dilutions de chaque volume de fluide par digitation visqueuse.

Ce phénomène de digitation pourrait en effet se produire à l'interface entre deux fluides de viscosité différente, lorsqu'un fluide de viscosité donnée déplace un fluide plus visqueux : l'interface entre les deux fluides, initialement plane par effet de la tension superficielle prend une forme digitée si elle se déplace en direction du fluide le plus visqueux.

Le procédé de récupération selon l'invention peut également comprendre une ou plusieurs étapes additionnelles correspondant à la mise en œuvre de procédures généralement mises en place pour optimiser la récupération d'hydrocarbures.

Ainsi, le procédé peut comprendre la mise en œuvre d'un gradient de salinité. Cette pratique, usuelle dans le cadre de l'EOR (Hirasaki et al. Society of Petroleum Engineers Journal 23(3), 486-500, 1983) a pour but d'améliorer la robustesse du procédé et de réduire la consommation en tensio-actifs due au piégeage de phases.

Le procédé selon l'invention convient particulièrement pour la récupération d'hydrocarbures contenant des huiles dites « conventionelles », de viscosité inférieures à 50 cP, mais aussi des huiles dites « visqueuses » ou « très visqueuses », jusqu'à 25.000 cP.

Avantageusement, le procédé d'extraction convient particulièrement aux formations souterraines dites carbonatées, contenant généralement au moins 30% de carbonates, typiquement au moins 50% de carbonates. Le procédé est donc particulièrement adapté aux réservoirs comprenant de la calcite, de la dolomite et leurs mélanges.

De façon inattendue, il a été découvert que sur ce type de roche, le procédé selon l'invention permettait d'obtenir une diminution significative de l'adsorption des tensio-actifs par rapport aux tensio-actifs habituellement utilisés.

On décrit également un kit comprenant :
à titre de première composition : une composition aqueuse comprenant :
a. un ou plusieurs tensio-actif(s) choisi(s) parmi les tensio-actifs cationiques et/ou les tensio-actifs non-ioniques ; et
b. un ou plusieurs polymère(s) choisi(s) parmi les polymères cationique(s) et/ou les polymères non-ionique(s).
   - et
   - à titre de seconde composition : une composition auxiliaire comprenant un ou plusieurs polymères choisis parmi les polymères cationiques et/ou non-, pour utilisation simultanée, séparée ou échelonnée dans le temps.

Généralement, la composition auxiliaire est injectée de façon séparée, ultérieurement à l'injection de la composition selon l'invention.

On décrit également ledit kit pour la récupération améliorée d'hydrocarbures (EOR).

### Figures

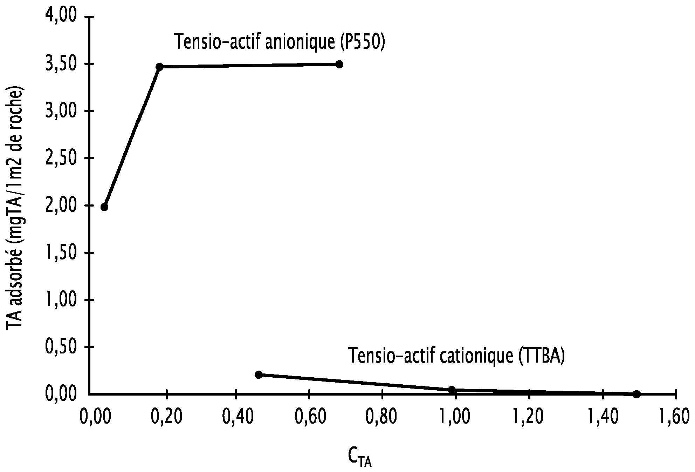

La figure 1 représente l'adsorption du tensio-actif pour une composition selon l'invention, comparativement avec les tensio-actifs habituels.

Les exemples suivants sont donnés à titre illustratif et non limitatif de la présente invention.

### Exemples

### Exemple 1 :

### Exemple 1A. Composition 1 (composition selon l'invention)

A 86,8g d'eau et sous agitation ont été ajoutés: 1g de chlorure de suif triméthylammonium (commercialisé par Ceca SA sous le nom MS 50), 0,5g de chlorure de suif dihydrogéné diméthyl ammonium (commercialisé par Ceca SA sous le nom Noramium M2SH), 0,5g de C18g-9PO-4EO (ou Alcoxylate Guerbet), 2g d'huile synthétique (commercialisé par Total Lubricants sous le nom Hydroseal G290H), 1,2g de copolymère de chlorure de diallyldiméthylammonium (DADMAC) et d'acrylamide(AM)(MW = 1,2 million daltons, commercialisé par SNF Floerger sous le nom Flocare C107), 8g d'un mélange de sels incluant NaCl et Na2SO4.

La dite composition ainsi préparée comprend donc :
- 1,02% de chlorure de suif triméthylammonium,
- 0,48% de chlorure de suif dihydrogéné diméthylammonium,
- 0,5% de C18g-9PO-4EO,
- 2% d'huile synthétique,
- 1,2% de copolymère de chlorure de diallyldiméthylammonium (DADMAC) et d'acrylamide(AM) MW = 1.2 million daltons
- 80 g/L d'un mélange de sels incluant NaCl et Na2SO4
- QSP eau.

### Exemple 1B : Composition 2 (composition auxiliaire)

Une deuxième composition a été préparée de la façon suivante :
A 94g d'eau, ont été ajoutés sous agitation : 1,8g de copolymère de chlorure de diallyldiméthylammonium (DADMAC) et d'acrylamide (AM) MW = 1,2 million daltons (commercialisé par SNF Floerger sous le nom Flocare C107), et 4,2 g d'un mélange de sels incluant NaCl et Na2SO4.

La deuxième composition ainsi préparée comprend :
- 1,8% de copolymère de chlorure de diallyldiméthylammonium (DADMAC) et d'acrylamide (AM) MW = 1,2 million daltons
- 42,3 g/L d'un mélange de sels incluant NaCl et Na2SO4.

### Exemple 2 :

On répète la procédure des exemples 1A et 1B en remplaçant le copolymère de chlorure de diallyldiméthylammonium (DADMAC) et d'acrylamide (AM) MW = 1,2 million daltons par les copolymères de chlorure de diallyldiméthylammonium (DADMAC) et de NVP, ou de DMAEMA et de NVP, ou par le polyoxyéthylène (EO).

### Exemple 3 :

On répète la procédure des exemples 1A et 1B en remplaçant le « chlorure de suif triméthylammonium » et le « chlorure de suif dihydrogéné diméthylammonium » par le « bromure de cétyl triméthylammonium (CTAB), bromure d'hexadécyl triméthylammonium, bromure de tetradécyl triméthylammonium (TTAB), chlorure de cétyl triméthylammonium (CTAC), chlorure de cétylpyridinium (CPC) ; chlorure de benzalkonium (BAC) ; chlorure de benzéthonium (BZT) ; 5-bromo-5-nitro-1,3-dioxane ; chlorure de diméthyldioctadécylammonium ; bromure de cétrimonium ; bromure de dioctadécyldiméthylammonium (DODAB) ».

### Exemple 4 : Test d'adsorption statique

On mesure l'adsorption des tensio-actifs sur un échantillon de calcite naturel sans présence de polymère pour des concentrations variables de tensio-actifs pour une composition selon l'invention comprenant TTBA à titre de tensio-actif, ainsi que pour un tensio-actif anionique (P550). Les résultats sont illustrés à la figure 1.

La figure 1 montre que l'adsorption d'un tensioactif anionique, l'alkyl benzyl sulfonate (ABS, « P550 » de Cepsa Quimica) est un ordre de grandeur plus important qu'un tensioactif cationique, le bromure de tétradecyl triméthylammonium (TTAB, Sigma Aldrich).

### Exemple 5 : Extraction

L'essai d'extraction est réalisé sur un réservoir de type carbonaté présentant la composition suivante :

| | Argiles et/ | | | | Illite/Smectite | | | | Carbone Index insoluble d'hydrogène | |
|---|---|---|---|---|---|---|---|---|---|---|
| ProfondeurMicas | | Calcite Chlorite Dolomite R1 | | | | Kaolinite Pyrite Quartz organique Index | | | | |
| | %poids | %poids | %poids | %poids | %poids | %poids | %poids | %poids | %poids | %poids |
| 2196.59 | 1,3 | 97,7 | 0 | 0 | 1 | 0,2 | 0,3 | 0,6 | 0,1 | 0,0028 |
| 2204.72 | 0,5 | 99 | 0,1 | 0,1 | 0,4 | 0 | 0,2 | 0,1 | 0 | 0,0009 |

On injecte 0,3 volumes de pore d'une composition 1 selon l'exemple 1A, puis 0,7 volumes de pore une composition 2 selon l'exemple 1B.

## Revendications

1. Procédé d'extraction d'hydrocarbures par récupération améliorée d'hydrocarbures (EOR), dans une formation souterraine, ledit procédé comprenant :
i. l'injection d'une composition comprenant :
a. un ou plusieurs tensio-actif(s) choisi(s) parmi les tensio-actifs cationiques et/ou les tensio-actifs non-ioniques ; et
b. un ou plusieurs polymère(s) choisi(s) parmi les polymères cationique(s) et/ou les polymères non-ionique(s); et
ii. le déplacement des hydrocarbures par la composition injectée ; et
iii. la production d'hydrocarbures.

2. Procédé selon la revendication 1 comprenant ultérieurement à l'étape i et antérieurement à l'étape ii, l'injection d'une composition auxiliaire comprenant un ou plusieurs polymères choisis parmi les polymères cationiques et/ou non-ioniques, et de l'eau.

3. Procédé selon la revendication 2 tel que la concentration du polymère dans la composition auxiliaire est supérieure à la concentration de polymère dans la première composition.

4. Procédé selon l'une quelconque des revendications précédentes telle que ledit minéral est une calcite.

5. Procédé selon l'une quelconque des revendications précédentes comprenant l'injection de polymère à une concentration comprise entre 100 et 10000 ppm.

6. Procédé selon l'une quelconque des revendications précédentes tel que lesdits polymères cationiques sont choisis parmi :
- les polyquaterniums, - les polymères de dialkylaminoéthylacrylate (ADAME),
- de diméthylaminoéthylméthacrylate (MADAME),
- ainsi que leurs copolymères.

7. Procédé selon la revendication 6 tel que les polyquaterniums sont choisis parmi :
- le polyquaternium-1 (éthanol, 2,2',2" -nitrilotris-, polymère avec 1,4-dichloro-2-butène et N,N,N',N'-tétraméthyl-2-butène-1,4-diamine) ;
- le polyquaternium-2 (poly[bis(2-chloroéthyl) éther-alt-1,3-bis[3-(diméthylamino)propyl]urée]) ;
- le polyquaternium-4 (copolymère de chlorure de hydroxyéthyl cellulose diméthyl diallylammonium, diallyldiméthylammonium -hydroxyéthyle cellulose);
- le polyquaternium-5 (AM-DMAEMA) (copolymère d'acrylamide et diméthylammoniuméthyl méthacrylate quaternaire) ;
- le polyquaternium-6 (DADMAC) (chlorure de poly(diallyldiméthylammonium)) ;
- le polyquaternium-7 (AM-DADMAC) (copolymère d'acrylamide et chlorure de diallyldiméthylammonium) ;
- le polyquaternium-10 (hydroxyéthyl cellulose quaternaire) ;
- le polyquaternium-11 (NVP-DMAEMA) (copolymère de N-vinylpyrrolidone et de chlorure de diméthylammonium quaternaire) ;
- le polyquaternium-15 (AM-DMAEMAMC) (copolymère d'acrylamide et chlorure de diméthylaminoéthyl méthacrylate de méthyle) ;
- le polyquaternium-16 (copolymère de N-vinylpyrrolidone et de vinylimidazole quaternaire) ;
- le polyquaternium-28 (copolymère de N-vinylpyrrolidone et de méthacrylamidopropyl triméthylammonium) ;
- le polyquaternium-32 (poly(chlorure d'acrylamide 2-méthacryloxyéthyltriméthyl ammonium)) ;
- le polyquaternium-37 (poly(chlorure de 2-méthacryloxyéthyltriméthylammonium)) ;
- le polyquaternium-42 (poly[dichlorure de oxyéthylène(diméthylimino)éthylène (diméthylimino)éthylène]) ;
- le polyquaternium-46 (terpolymère de vinylcaprolactame, N-vinylpyrrolidone, et vinylimidazole quaternaire) ;
- le chlorure de guar hydroxypropyltrimonium (GHPTC) ;
- APTAC issu du monomère (chlorure d'acrylamidopropyltriméthylammonium) de formule : 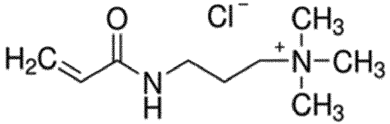
- les polymères de méthacryloyle tels que les polymères de MAPBAC (Méthacryloyl Aminopropyl diméthyl benzyl ammonium chloride, 122988-32-3), MAPDES (Méthacryloyl aminopropyl diméthyl éthyl ammonium éthylsulfate, 70942-19-7), MAPTAC (Méthacryloyl aminopropyl triméthyl ammonium chloride, 51410-72-1), MAPTAP (Méthacryloyl aminopropyl triméthyl ammonium p-toluènesulfonate, 98060-29-8), MAPTAS (Méthacryloyl aminopropyl triméthyl ammonium méthylsulfate, 51441-65-7), MOEBAC (Méthacryloyl oxyéthyl diméthyl benzyl ammonium chloride, 46917-07-1), MOEDES (Méthacryloyl oxyéthyl diméthyl éthyl ammonium éthylsulfate, 13223-03-5), MOETAP (Méthacryloyl oxyéthyl triméthyl-ammonium p-toluènesulfonate, 40820-77-7), MOETAS (Méthacryloyl oxyéthyl triméthyl ammonium méthylsulfate, 6891-44-7), QDM (Méthacryloyl oxyéthyl triméthyl ammonium chloride, 5039-78-1).

8. Procédé selon larevendication 6 tel que lesdits copolymères sont des copolymères avec la NVP (N-vinylpyrrolidone) et l'oxyéthylène (EO).

9. Procédé selon l'une quelconque des revendications précédentes telle que lesdits polymères sont choisis parmi NVP-DADMAC, NVP-DMAEMA, NVP-APTAC, NVP-ADAME, NVP-MADAME, PEO, EO-DADMAC, EO-DMAEMA, EO-APTAC, EO-ADAME, EO-MADAME.

10. Procédé selon l'une quelconque des revendications précédentes telle que lesdits polymères ont un poids moléculaire compris entre 1 million de daltons et 30 millions de daltons.

11. Procédé selon l'une quelconque des revendications précédentes, telle que lesdits tensio-actifs sont choisis parmi les sels d'ammonium quaternaire ; les sels de phosphonium ; les sels de sulfonium ; les sels de iodonium ; les tensio-actifs :
- à liaison ester de type R-CO-O-R' tels que les esters de glycol, les esters de glycérol, les esters de polyoxyéthylène glycol, les esters de sorbitan, les esters de sorbitan polyoxyéthylèniques ou polysorbates tels que les tensio-actifs de type Tween ;
- à liaison éther de type R-O-R' tels que les alcools alkoxylés, les alcools éthoxylés, les éthers d'alcools gras et de polyoxyéthylène glycol ;
- à liaison de type amide de type R-CO-NH-R'

12. Procédé selon l'une quelconque des revendications précédentes telle que les tensio-actifs cationiques répondent à la formule générale (I) : 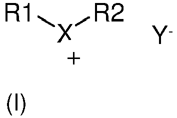 dans laquelle :
-X⁺- est choisi parmi -N⁺ (R3)(R4)-, -S⁺ (R3)-, -I⁺-,- P⁺H₄ (R3)(R4)-;
Y⁻ est choisi parmi RSO₄⁻, Hal⁻, RCOO⁻ ;
R1, R2 identiques ou différents représentent indépendamment un groupe choisi parmi les groupes (C1-C24)alkyle linéaire ou ramifié, (C2-C24)alkényle linéaire ou ramifié, (C6-C12)aryle, alkyle et alkényle étant éventuellement substitué par un groupe phényle ;
ou bien R1 et R2 forment ensemble avec l'atome auquel ils sont reliés un cycle hétéroaromatique de 5 à 7 chaînons ;
R3, R4, lorsqu'ils sont présents, sont identiques ou différents, représentent indépendamment un groupe (C1-C24)alkyle linéaire ou ramifié ou un groupe de formule - [(CH₂)ₘO]ₙ-H ;
Hal⁻ représente un halogénure tel que Cl⁻, Br⁻ ;
R représente un groupe (C1-C6)alkyle linéaire ou ramifié ;
m est égal à 2 ou 3 ;
n représente le nombre de motifs oxyde d'éthylène ou oxyde de propylène et est compris entre 1 et 5 .

13. Procédé selon l'une quelconque des revendications précédentes, telle que les tensio-actifs sont choisis parmi le dichlorhydrate d'octénidine ; les sels d'alkyltriméthylammonium tels que le bromure de cétyl triméthylammonium (CTAB) ou bromure d'hexadécyl triméthylammonium, le bromure de tetradécyl triméthylammonium (TTAB), le chlorure de cétyl triméthylammonium (CTAC), le chlorure de suif triméthylammonium, le chlorure de suif dihydrogéné triméthylammonium ; le chlorure de cétylpyridinium (CPC) ; le chlorure de benzalkonium (BAC) ; le chlorure de benzéthonium (BZT) ; le 5-bromo-5-nitro-1,3-dioxane ; le chlorure de diméthyldioctadécylammonium ; le bromure de cétrimonium ; le bromure de dioctadécyldiméthylammonium (DODAB), les esters de glycol, les esters de glycérol, les esters de polyoxyéthylène glycol, les esters de sorbitan, les esters de sorbitan polyoxyéthylèniques ou polysorbates tels que les tensio-actifs de type Tween ; les alcools alkoxylés tels que les alcools éthoxylés ; les éthers d'alcools gras et de polyoxyéthylène glycol.

14. Procédé selon l'une quelconque des revendications précédentes comprenant en outre de l'huile et/ou des sels.

15. Procédé selon l'une quelconque des revendications précédentes comprenant en outre un ou plusieurs additif(s).

16. Procédé selon la revendication 15 telle que lesdits additifs sont choisis parmi les alcalis, tampons, stabilisateurs, solubilisants, co-surfactants, clarifiants, bactéricides, inhibiteurs de dépôts, inhibiteurs de corrosion, inhibiteurs d'hydrates.

## Patentansprüche

1. Kohlenwasserstoffextraktionsverfahren durch verbesserte Rückgewinnung von Kohlenwasserstoffen (EOR), in einer unterirdischen Ausbildung, wobei das Verfahren aufweist:
i. Injektion einer Zusammensetzung aufweisend:
a. ein oder mehrere oberflächenaktive(s) Mittel, ausgewählt aus kationischen oberflächenaktiven Mitteln und/oder nichtionischen oberflächenaktiven Mitteln, und
b. ein oder mehrere Polymer(e), ausgewählt aus kationischen Polymeren und/oder nichtionischen Polymeren, und
ii. die Verdrängung von Kohlenwasserstoffen durch die injizierte Zusammensetzung, und
iii. die Kohlenwasserstoffproduktion.

2. Verfahren gemäß Anspruch 1, aufweisend nach Schritt i und vor Schritt ii, die Injektion einer Hilfszusammensetzung, die aufweist ein oder mehrere Polymere, ausgewählt aus kationischen und/oder nichtionischen Polymeren, und Wasser.

3. Verfahren gemäß Anspruch 2, wobei die Konzentration des Polymers in der Hilfszusammensetzung größer ist als die Konzentration des Polymers in der ersten Zusammensetzung.

4. Verfahren gemäß irgendeinem der vorstehenden Ansprüche, wobei das Mineral Calcit ist.

5. Verfahren gemäß irgendeinem der vorstehenden Ansprüche, aufweisend die Injektion des Polymers in einer Konzentration zwischen 100 und 10.000 ppm.

6. Verfahren gemäß irgendeinem der vorstehenden Ansprüche, wobei die kationischen Polymere ausgewählt sind aus:
- Polyquaternium, - den Dialkylaminoethylacrylat-Polymeren (ADAME),
- Dimethylaminoethylmethacrylat (MADAME),
- sowie deren Copolymere.

7. Verfahren gemäß Anspruch 6, wobei Polyquaternium ausgewählt ist aus:
- Polyquaternium-1 (Ethanol, 2,2',2" -Nitrilotris-, Polymer mit 1,4-Dichlor-2-buten und N,N,N',N'-Tetramethyl-2-buten-1,4-diamin),
- Polyquaternium-2 (Poly[bis(2-chlorethyl)ether-alt-1,3-bis[3-(dimethylamino)propyl]harnstoff]),
- Polyquaternium-4 (Copolymer aus Hydroxyethylcellulosedimethyldiallylammoniumchlorid, Diallyldimethylammonium-Hydroxyethylcell ulose),
- Polyquaternium-5 (AM-DMAEMA) (Copolymer aus Acrylamid und quaternärem Dimethylammoniumethylmethacrylat,
- Polyquaternium-6 (DADMAC) (Poly(diallyldimethylammoniumchlorid)),
- Polyquaternium-7 (AM-DADMAC) (Copolymer aus Acrylamid und Diallyldimethylammoniumchlorid),
- Polyquaternium-10 (quarternäre Hydroxyethylcellulose),
- Polyquaternium-11 (NVP-DMAEMA) (Copolymer aus N-Vinylpyrrolidon und quaternärem Dimethylammoniumchlorid),
- Polyquaternium-15 (AM-DMAEMAMC) (Copolymer aus Acrylamid und Dimethylaminoethylmethylmethacrylatchlorid),
- Polyquaternium-16 (Copolymer aus N-Vinylpyrrolidon und quarternärem Vinylimidazol),
- Polyquaternium-28 (Copolymer aus N-Vinylpyrrolidon und Methacrylamidopropyltrimethylammonium),
- Polyquaternium-32 (Poly(acrylamid-2-methacryloxyethyltrimethylammoniumchlorid)),
- Polyquaternium-37 (Poly(2-methacryloxyethyltrimethylammoniumchlorid)),
- Polyquaternium-42 (Poly[oxyethylen(dimethylimin)ethylen(dimethylimin)ethylendichlorid]),
- Polyquaternium-46 (Terpolymer aus Vinylcaprolactam, N-Vinylpyrrolidon und quaternärem Vinylimidazol),
- Hydroxypropyltrimonium-Guarchlorid (GHPTC),
- APTAC, abgeleitet von dem Monomer (Acrylamidopropyltrimethylammoniumchlorid) der Formel : 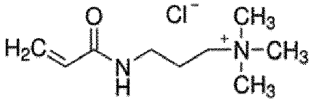
- Methacryloyl-Polymere, wie z.B. MAPBAC (Methacryloylaminopropyldimethylbenzylammoniumchlorid, 122988-32-3), MAPDES (Methacryloylaminopropyldimethylethylammoniumethylsulfat, 70942-19-7), MAPTAC (Methacryloylaminopropyltrimethylammoniumchlorid, 51410-72-1), MAPTAP (Methacryloylaminopropyltrimethylammonium-p-toluolsulfonat, 98060-29-8), MAPTAS (Methacryloylaminopropyltrimethylammoniummethylsulfat, 51441-65-7), MOEBAC (Methacryloyloxyethyldimethylbenzylammoniumchlorid, 46917-07-1), MOEDES (Methacryloyloxyethyldimethylethylammoniumethylsulfat, 13223-03-5), MOETAP (Methacryloyloxyethyltrimethylammonium-p-toluolsulfonat, 40820-77-7), MOETAS (Methacryloyloxyethyltrimethylammoniummethylsulfat, 6891-44-7), QDM (Methacryloyloxyethyltrimethylammoniumchlorid, 5039-78-1).

8. Verfahren gemäß Anspruch 6, wobei die Copolymere Copolymere mit NVP (N-Vinylpyrrolidon) und Oxyethylen (EO) sind.

9. Verfahren gemäß irgendeinem der vorstehenden Ansprüche, wobei die Polymere ausgewählt sind aus NVP-DADMAC, NVP-DMAEMA, NVP-APTAC, NVP-ADAME, NVP-MADAME, PEO, EO-DADMAC, EO-DMAEMA, EO-APTAC, EO-ADAME, EO-MADAME.

10. Verfahren gemäß irgendeinem der vorstehenden Ansprüche, wobei die Polymere ein Molekulargewicht zwischen 1 Million Dalton und 30 Millionen Dalton haben.

11. Verfahren gemäß irgendeinem der vorstehenden Ansprüche, wobei die oberflächenaktiven Mittel ausgewählt sind aus quaternären Ammoniumsalzen, Phosphoniumsalzen, Sulfoniumsalzen, lodoniumsalzen, oberflächenaktiven Mitteln:
- mit Esterverknüpfung des Typs R-CO-O-R', wie z.B. Glykolester, Glycerinester, Polyoxyethylenglykolester, Sorbitanester, Polyoxyethylensorbitanester oder Polysorbatester, wie z.B. oberflächenaktive Mittel des Typs Tween,
- mit Etherverknüpfung des Typs R-O-R', wie z.B. Alkoxylalkohole, Ethoxylalkohole, Fettalkoholether und Polyoxyethylenglykolether,
- mit Amidverknüpfung des Typs R-CO-NH-R'.

12. Verfahren gemäß irgendeinem der vorstehenden Ansprüche, wobei die kationischen oberflächenaktiven Mittel der allgemeinen Formel (I) entsprechen: 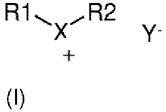 wobei:
-X⁺- ausgewählt ist aus -N⁺ (R3)(R4)-, -S⁺ (R3)-, -I⁺-,- P⁺H₄ (R3)(R4)-,
Y ausgewählt ist aus RSO₄⁻, Hal⁻, RCOO⁻,
R1, R2 gleich oder verschieden, unabhängig voneinander eine Gruppe darstellen, ausgewählt aus linearen oder verzweigten (C1-C24)-Alkylgruppen, linearen oder verzweigten (C2-C24)-Alkenylgruppen, (C6-C12)-Arylgruppen, Alkylgruppen und Alkenylgruppen, die gegebenenfalls durch eine Phenylgruppe substituiert sind,
oder R1 und R2 zusammen mit dem Atom, an das sie gebunden sind, einen 5- bis 7-gliedrigen heteroaromatischen Ring ausbilden,
R3, R4, falls vorhanden, gleich oder verschieden, unabhängig voneinander eine lineare oder verzweigte (C1-C24)-Alkylgruppe oder eine Gruppe der Formel - [(CH₂)ₘO]ₙ-H darstellen,
Hal⁻ für ein Halogenid, wie z.B. Cl⁻, Br⁻, steht,
R eine lineare oder verzweigte (C1-C6)-Alkylgruppe darstellt,
m gleich 2 oder 3 ist,
n die Anzahl der Ethylenoxid- oder Propylenoxideinheiten darstellt und zwischen 1 und 5 liegt.

13. Verfahren gemäß irgendeinem der vorstehenden Ansprüche, wobei die oberflächenaktiven Mittel ausgewählt sind aus Octenidindichlorhydrat, Alkyltrimethylammoniumsalzen, wie z.B. Cetyltrimethylammoniumbromid (CTAB) oder Hexadecyltrimethylammoniumbromid, Tetradecyltrimethylammoniumbromid (TTAB), Cetyltrimethylammoniumchlorid (CTAC), Trimethylammoniumtalgchlorid, Trimethylammoniumdihydrogentalgchlorid, Cetylpyridiniumchlorid (CPC), Benzalkoniumchlorid (BAC), Benzethoniumchlorid (BZT), 5-Brom-5-nitro-1,3-dioxan, Dimethyldioctadecylammoniumchlorid, Cetrimoniumbromid, Dioctadecyldimethylammoniumbromid (DODAB), Glykolester, Glycerinester, Polyoxyethylenglykolester, Sorbitanester, Polyoxyethylensorbitanester oder Polysorbatester, wie z.B. oberflächenaktive Mittel des Typs Tween, Alkoxylalkohole, wie z.B. Ethoxylalkohole, Fettalkoholether und Polyoxyethylenglykolether.

14. Verfahren gemäß irgendeinem der vorstehenden Ansprüche, welches weiterhin Öl und/oder Salze aufweist.

15. Verfahren gemäß irgendeinem der vorstehenden Ansprüche, das weiterhin einen oder mehrere Zusatzstoff(e) aufweist.

16. Verfahren gemäß Anspruch 15, wobei die Additive ausgewählt sind aus Alkalimetallen, Puffern, Stabilisatoren, Lösungsvermittlern, Co-oberflächenaktiven-Mitteln, Klärmitteln, Bakteriziden, Ablagerungsinhibitoren, Korrosionsinhibitoren, Hydratinhibitoren.

## Claims

1. An extraction method for extracting hydrocarbons by means of enhanced oil recovery (EOR) in a subterranean formation including:
i. the injection of a composition comprising:
a. one or more surfactant(s) selected from among cationic surfactants and/or non-ionic surfactants; and
b. one or more polymer(s) selected from among the cationic polymers and/or non-ionic polymers; and
ii. the displacement of hydrocarbons by the injected composition; and
iii. the production of hydrocarbons.

2. The method according to claim 1 including subsequent to the step i and prior to the step ii, the injection of an auxiliary composition comprising one or more polymers selected from among the cationic polymers and/or non-ionic polymers, and water.

3. The method according to claim 2, wherein the concentration of the polymer in the auxiliary composition is greater than the concentration of the polymer in the first composition.

4. The method according to anyone of the preceding claims wherein said claim 19 or 20 such that the said subterranean formation comprises a calcite mineral.

5. The method according to anyone of the preceding claims including the injection of polymer at a concentration of between 100 ppm and 10,000 ppm.

6. The method according to anyone of the preceding claims wherein the said cationic polymers are selected from among :
the polyquaterniums,
the polymers of dialkyl aminoethyl acrylate (Dimethylaminoethyl acrylate-ADAME), (Dimethylamino)ethyl methacrylate (MADAME),
as well as the copolymers thereof.

7. The method according to claim 6 wherein the polyquaterniums are chosen from:
Polyquaternium-1 (ethanol, 2,2',2" -nitrilotris-, polymer with 1,4-dichloro-2-butene and N,N,N',N'-tetramethyl-2-butene-1,4-diamine);
Polyquaternium-2 (poly[bis(2-chloroethyl)ether-alt-1,3-bis[3-(dimethylamino)propyl]urea]);
Polyquaternium-4 (hydroxyethyl cellulose dimethyl diallylammonium chloride copolymer, diallyldimethylammonium chloride-hydroxyethyl cellulose copolymer);
Polyquaternium-5 (AM-DMAEMA) (copolymer of acrylamide and quaternised dimethylammoniumethyl methacrylate);
Polyquaternium-6 (DADMAC) (poly(diallyldimethylammonium chloride)),
Polyquaternium-7 (AM-DADMAC) (copolymer of acrylamide and diallyldimethylammonium chloride);
Polyquaternium-10 (quaternised hydroxyethyl cellulose);
Polyquaternium-11 (NVP-DMAEMA) (copolymer of N-vinylpyrrolidone quaternised dimethylaminoethyl methacrylate);
Polyquaternium-15 (AM-DMAEMAMC) (copolymer of acrylamide and dimethylaminoethyl methacrylate methyl chloride);
Polyquaternium-16 (copolymer of N-vinylpyrrolidone and quaternised vinylimidazole);
Polyquaternium-28 (copolymer of N-vinylpyrrolidone and methacrylamidopropyl trimethylammonium);
Polyquaternium-32 (poly(acrylamide 2-methacryloxyethyltrimethyl ammonium chloride));
Polyquaternium-37 (poly(2-methacryloxyethyltrimethylammonium chloride));
Polyquaternium-42 (Poly[oxyethylene(dimethylimino)ethylene (dimethylimino)ethylene dichloride]);
Polyquaternium-46 (terpolymer of vinylcaprolactam, N-vinylpyrrolidone, and quaternised vinylimidazole);
Guar Hydroxypropyltrimonium Chloride (GHPTC)
APTAC derived from the monomer (acrylamidopropyl-trimethylammonium chloride) having the formula: 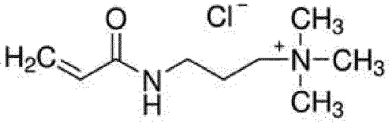
- methacryloyl polymers such as polymers of MAPBAC (Methacryloyl aminopropyl dimethyl benzyl ammonium chloride, 122988-32-3), MAPDES (Methacryloyl aminopropyl dimethyl ethyl ammonium ethylsulfate, 70942-19-7), MAPTAC (Methacryloyl aminopropyl trimethyl ammonium chloride, 51410-72-1), MAPTAP (Methacryloyl aminopropyl trimethyl ammonium p-toluenesulfonate, 98060-29-8), MAPTAS (Methacryloyl aminopropyl trimethyl ammonium methylsulfate, 51441-65-7), MOEBAC (Methacryloyl oxyethyl dimethyl benzyl ammonium chloride, 46917-07-1), MOEDES (Methacryloyl oxyethyl dimethyl ethyl ammonium ethylsulfate, 13223-03-5), MOETAP (Methacryloyl oxyethyl trimethyl ammonium p-toluenesulfonate, 40820-77-7), MOETAS (Methacryloyl oxyethyl trimethyl ammonium methylsulfate, 6891-44-7), QDM (Methacryloyl oxyethyl trimethyl ammonium chloride 5039-78-1).

8. The method according to claim 6 wherein said copolymers are copolymers with NVP (N-vinylpyrrolidone) and oxyethylene (OE).

9. The method according to anyone of the preceding claims wherein said polymers are chosen from among NVP-DADMAC, NVP-DMAEMA, NVP-APTAC, NVP-ADAME, NVP-MADAME, POE, OE-DADMAC, OE-DMAEMA, OE-APTAC, OE-ADAME, OE-MADAME.

10. The method according to anyone of the preceding claims such that the said polymers have a molecular weight of between 1 million daltons and 30 million daltons.

11. The method according to any one of the preceding claims, such that the said surfactants are selected from among the quaternary ammonium salts; the phosphonium salts; the sulfonium salts; the iodonium salts; and the surfactants:
having an R-CO-O-R' type ester bond such as glycol esters, glycerol esters, polyoxyethylene glycol esters, sorbitan esters, polyoxyethylene sorbitan esters, or polysorbates such as Tween type surfactants;
having an R-O-R' type ether bond such as alkoxylated alcohols, ethoxylated alcohols, fatty alcohol and polyoxyethylene glycol ethers;
having an R-CO-NH-R' type amide bond.

12. The method according to any one of the preceding claims, such that the cationic surfactants corresponding to the general formula (I): 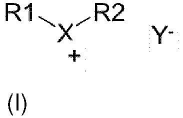 in which:
-X⁺- is selected from -N⁺ (R3)(R4)-, -S⁺ (R3)-, -I⁺-,- P⁺H₄ (R3)(R4)-;
Y⁻ is selected from RSO₄⁻, Hal⁻, RCOO⁻;
R1, R2 are identical or different and independently represent a group selected from among the linear or branched (C1-C24) alkyl groups, linear or branched (C2- C24) alkenyl groups, (C6-C12) aryl, alkyl and alkenyl groups being possibly substituted by a phenyl group;
or indeed R1 and R2 together with the atom to which they are attached form a heteroaromatic ring of 5 to 7 ring members (the said ring preferably comprising the nitrogen atom by way of the sole heteroatom);
R3, R4, when they are present, are identical or different, and independently represent a linear or branched (C1-C24) alkyl group or a group having the formula -[(CH₂)ₘO]ₙ-H; Hal⁻ represents a halide such as Cl⁻, Br⁻;
R represents a linear or branched (C1-C6) alkyl group;
m is equal to 2 or 3;n represents the number of ethylene oxide units or propylene oxide units and is between 1 and 5.

13. The method according to any one of the preceding claims, such that the surfactants are selected from among octenidine dihydrochloride; alkyl trimethylammonium salts such as cetyl trimethyl ammonium bromide (CTAB), or hexadecyl trimethyl ammonium bromide, tetradecyl trimethyl ammonium bromide (TTAB), cetyl trimethyl ammonium chloride (CTAC), tallow trimethyl ammonium chloride, di-hydrogenated tallow trimethyl ammonium chloride; cetylpyridinium chloride (CPC); benzalkonium chloride (BAC); benzethonium chloride (BZT); 5-bromo-5-nitro-1,3-dioxane; dimethyldioctadecylammonium chloride; cetrimonium bromide; dioctadecyldimethylammonium bromide (DODAB), glycol esters, glycerol esters, polyoxyethylene glycol esters, sorbitan esters, polyoxyethylene sorbitan esters or polysorbates such as Tween type surfactants; alkoxylated alcohols such as ethoxylated alcohols; ethers of fatty alcohols and polyoxyethylene glycol.

14. The method according to any one of the preceding claims in addition comprising oil and/or salts thereof.

15. The method according to any one of the preceding claims further comprising one or more additive(s).

16. The method according to claim 15 such that the said additives are selected from alkalis, buffers, stabilisers, solubilisers, co-surfactants, clarifiers, bactericides, scale deposit inhibitors, corrosion inhibitors, hydrate inhibitors.
